(19) Europäisches Patentamt
European Patent Office
Office européen des brevets

(11) **EP 4 645 455 A1**

(12) **EUROPEAN PATENT APPLICATION**
published in accordance with Art. 153(4) EPC

(43) Date of publication:
**05.11.2025 Bulletin 2025/45**

(21) Application number: **24829818.4**

(22) Date of filing: **05.02.2024**

(51) International Patent Classification (IPC):
$H01M\ 4/36$ (2006.01)   $H01M\ 4/58$ (2010.01)
$H01M\ 10/0525$ (2010.01)   $H01M\ 10/058$ (2010.01)
$H01M\ 4/131$ (2010.01)

(52) Cooperative Patent Classification (CPC):
Y02E 60/10

(86) International application number:
**PCT/CN2024/076056**

(87) International publication number:
**WO 2025/001158 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023 CN 202310759849**

(71) Applicant: **Contemporary Amperex Technology
Co., Limited
Ningde, Fujian 352100 (CN)**

(72) Inventors:
• **HUANG, Ying
Ningde, Fujian 352100 (CN)**
• **YAO, Bin
Ningde, Fujian 352100 (CN)**
• **LIU, Jiang
Ningde, Fujian 352100 (CN)**
• **LIU, Xiaomei
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE SHEET, BATTERY CELL, SECONDARY BATTERY AND ELECTRIC DEVICE**

(57) The present application relates to a positive electrode sheet, a battery cell, a secondary battery and an electric device. The positive electrode sheet includes a positive electrode active material and a lithium supplement additive, where the lithium supplement additive meets the following relational expression: $R \leq C_{min}/(100*m*Q)$. In the expression, m represents a loading capacity on the positive electrode sheet per unit of area, and the loading capacity includes a total mass of the positive electrode active material and the lithium supplement additive; $C_{min}$ represents a minimum rate value applied to the positive electrode sheet during an actual application process; Q represents a theoretical gram capacity of the lithium supplement additive; and R represents a mass percentage content of the lithium supplement additive in the loading capacity on the positive electrode sheet per unit of area.

FIG. 1

**Description**

CROSS REFERENCE

The present application makes reference to Chinese Patent Application No. 202310759849.6 filed on June 26, 2023 and entitled "POSITIVE ELECTRODE SHEET, BATTERY CELL, SECONDARY BATTERY AND ELECTRIC DEVICE", which is incorporated herein by reference in its entirety.

TECHNICAL FIELD

The present application relates to the technical field of batteries, and in particular, to a positive electrode sheet, a battery cell, a secondary battery and an electric device.

BACKGROUND

Secondary batteries represented by lithium-ion batteries have characteristics of large capacity, long service life, etc., and thus can be applied widely in electronic apparatuses, such as mobile phones, notebook computers, electric bicycles, electric vehicles, electric airplanes, electric ships, electric toy cars, electric toy ships, electric toy airplanes, electric tools, etc. With the increasingly wide application range of batteries, the requirements for the performance of secondary batteries are gradually becoming more stringent. In order to improve the performance of secondary batteries, the materials inside the secondary batteries, such as the positive electrode materials, are usually optimized and improved. However, when the currently improved positive electrode materials are applied to secondary batteries, the secondary batteries still have the problem of poor charging capacity during use.

SUMMARY

An objective of the present application is to provide a positive electrode sheet, a battery cell, a secondary battery and an electric device, which can improve the charging capacity of the secondary battery.

In order to achieve the above objective, a first aspect of the present application provides a positive electrode sheet, including a positive electrode active material and a lithium supplement additive, where the lithium supplement additive satisfies the following relational expression: $R \leq C_{min}/(100*m*Q)$, where in the expression, m represents a loading capacity on the positive electrode sheet per unit of area, and the loading capacity includes a total mass of the positive electrode active material and the lithium supplement additive;

Cmin represents a minimum rate value applied to the positive electrode sheet during an actual application process;

Q represents a theoretical gram capacity of the lithium supplement additive; and

R represents a mass percentage content of the lithium supplement additive in the loading capacity on the positive electrode sheet per unit of area.

The positive electrode sheet provided in the present application includes a lithium supplement additive, and the lithium supplement additive can increase the gram capacity of the positive electrode active material, thereby increasing the charging capacity of the battery cell. Meanwhile, the mass percentage content of the lithium supplement additive in the positive electrode sheet satisfies the above relational expression, and thus, the mass percentage content of the lithium supplement additive in the positive electrode sheet can be controlled by adjusting Cmin, m and Q. By controlling the mass percentage content of the lithium supplement additive, it is helpful for the lithium supplement additive to slowly de-lithiate during the cycle process, so that its capacity can be slowly and continuously released, thereby continuously improving the charging capacity of the battery core and the secondary battery.

In some implementations of the present application, the positive electrode sheet satisfies the following condition: $0.1\% \leq R \leq 20\%$, and optionally $1\% \leq R \leq 10\%$.

By controlling the mass percentage content of the lithium supplement additive within this range and in cooperation with the specific voltage range during the actual cycle process, it is beneficial for the lithium supplement additive to slowly de-lithiate, so that its capacity can be slowly released, and continuous lithium supplement is realized during the cycle process, thereby realizing continuous improvement of the charging capacity.

In some implementations of the present application, the positive electrode sheet satisfies at least one of the following conditions:

$$(1)\ 0.01C \leq Cmin \leq 1C,\ \text{and optionally}\ 0.05C \leq Cmin \leq 0.95C;$$

$$(2)\ 0.1\ g/mm^2 \leq m \leq 0.5\ g//mm^2,\ \text{and optionally}\ 0.2\ g/mm^2 \leq m \leq 0.4\ g/mm^2;$$

$$(3)\ 150\ mAh/g \leq Q \leq 300\ mAh/g,\ \text{and optionally}\ 190\ mAh/g \leq Q \leq 280\ mAh/g.$$

During the actual application process, the minimum rate value Cmin applied to the positive electrode sheet, the loading capacity m per unit area of the positive electrode sheet, and the theoretical gram capacity Q of the lithium supplement additive are within the above ranges, which is beneficial to achieve the lithium-supplementing effect on the positive electrode and sufficiently improve the gram capacity of the positive electrode active material, and is also beneficial to regulate the mass percentage content of the lithium supplement additive and control the addition amount within an appropriate range, thereby facilitating the realization of a slow and continuous lithium-supplementing effect and realizing the continuous improvement of the charging capacity of the battery cell and the secondary battery.

In some implementations of the present application, the lithium supplement additive includes one or more of lithium manganate, a nickel-cobalt-manganese ternary material, a nickel-cobalt-aluminum ternary material and lithium nickelate, and optionally a nickel-cobalt-manganese ternary material.

In some implementations of the present application, the positive electrode active material includes one or more of lithium iron phosphate, lithium manganese phosphate, lithium cobaltate and lithium manganese iron phosphate, and optionally lithium iron phosphate.

The above types of positive electrode active materials belong to lithium iron phosphate-based positive electrode materials, and generally have a relatively low theoretical gram capacity. However, by adding the above types of lithium supplement additives with relatively high gram capacity, it is beneficial to improve the gram capacity of the positive electrode active material, thereby improving the charging capacity of the battery cell and the secondary battery.

A second aspect of the present application further provides a battery cell, including the positive electrode sheet according to the first aspect of the present application.

In some implementations of the present application, a cycle voltage range of the battery cell is 2.5 volts (V) to 3.65 V.

During the actual charge-discharge cycle process, within the above cycle voltage range, the capacity of the positive electrode active material can be sufficiently released, and at the same time, during multiple cycles, the lithium supplement additive can achieve slow delithiation, thereby achieving a continuous and slow release of the capacity, which is beneficial to realize a continuous improvement of the charging capacity of the battery cell.

In some implementations of the present application, a cycle rate range of the battery cell is 0.33 rate (C) to 2C.

During the actual charge-discharge cycle process, the above cycle rate range is suitable for the normal cycle of the positive electrode active material. However, within this cycle rate range, the lithium supplement additive can be cycled at a high rate. Such high-rate cycling easily destroys the crystal structure of the lithium supplement additive, causing the deintercalated lithium ions to be unable to reinsert back into the positive electrode body and remain on the negative electrode side, thereby achieving the effect of supplementing lithium to the negative electrode, which is beneficial to improve the cycle life of the battery cell.

A third aspect of the present application provides a secondary battery, including the battery cell according to the second aspect of the present application.

A fourth aspect of the present application provides an electrical device, including the secondary battery according to the third aspect of the present application.

The electrical device of the present application includes the secondary battery provided by the present application, and thus has at least the same advantages as the secondary battery.

DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work. In the accompanying drawings:

FIG. 1 is a schematic diagram of a secondary battery according to an implementation of the present application.

FIG. 2 is an exploded view of the secondary battery according to an implementation of the present application shown in FIG. 1.

FIG. 3 is a schematic diagram of a secondary battery according to yet another implementation of the present application.

FIG. 4 is a schematic diagram of a secondary battery according to another implementation of the present application.

FIG. 5 is an exploded view of the secondary battery according to an implementation of the present application shown in FIG. 4.

FIG. 6 is a schematic diagram of an electric device using a secondary battery as a power supply according to an implementation of the present application

Reference signs: 1 battery pack; 2 upper box body; 3 lower box body; 4 battery module; 5 battery cell; 51 housing; 52 electrode assembly; and 53 top cover assembly.

DESCRIPTION OF EMBODIMENTS

Hereinafter, implementations specifically disclosing the positive electrode sheet, battery cell, secondary battery and electric device of the present application are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of this application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

At present, the positive electrode active material used in the secondary battery, especially the lithium iron phosphate-based positive electrode active material, generally has the problem of poor charging capacity when used in the secondary battery due to its low gram capacity. In order to improve the charging capacity, the commonly used method at present is to supplement lithium to the positive electrode of the secondary battery. That is, it is mainly achieved by adding lithium-rich compounds to the positive electrode active material. These compounds undergo irreversible decomposition during formation, and the released lithium ions participate in the formation of the solid electrolyte interface (SEI) film on the negative electrode, compensating for the active lithium ions lost during the first charge of traditional lithium-ion batteries during formation, thereby improving the charging capacity. However, this method can only realize lithium supplement in the formation stage of the battery. The lithium-rich compound can only release the capacity at one time in the formation stage, and cannot slowly and gradually release the capacity of the lithium-rich compound to continuously perform lithium supplement during the subsequent cycle process, and cannot realize the continuous improvement of the capacity.

Based on this, the present application provides a positive electrode sheet. By adding a lithium supplement additive and controlling the content of the lithium supplement additive in the positive electrode sheet, and simultaneously controlling the voltage and rate ranges of the positive electrode sheet (and the battery cell) during actual use, the capacity of the lithium supplement additive can be slowly and gradually released during the actual cycle process, thereby realizing the continuous improvement of the charging capacity of the battery cell and the secondary battery.

Positive electrode sheet

A first aspect of the present application proposes a positive electrode sheet, including a positive electrode active material and a lithium supplement additive, where the lithium supplement additive meets the following relational expression: $R \leq Cmin/(100*m*Q)$. In the expression, m represents a loading capacity on the positive electrode sheet per unit of area, and the loading capacity includes a total mass of the positive electrode active material and the lithium supplement additive; Cmin represents a minimum rate value applied to the positive electrode sheet during an actual application process; Q represents a theoretical gram capacity of the lithium supplement additive; and R represents a mass percentage content of the lithium supplement additive in the loading capacity on the positive electrode sheet per unit of area.

It should be noted that the minimum rate value applied to the positive electrode sheet during the actual application process refers to that after the positive electrode sheet is assembled into battery cells of different specifications, during the actual application process, based on the different specifications of the battery cells and the actual usage conditions, there will be corresponding different reference values for the usage rate ranges (including the upper limit and the lower limit). The lower limit of each different usage rate range is the minimum rate value applied to the positive electrode sheet during the actual application process.

It should be noted that the actual application process refers to the actual cycle process of the battery cell after the positive electrode sheet is assembled into battery cells of different specifications.

The positive electrode sheet provided in the present application includes a lithium supplement additive, and the lithium supplement additive can increase the gram capacity of the positive electrode active material, thereby increasing the charging capacity of the battery cell. Meanwhile, the mass percentage content of the lithium supplement additive in the positive electrode sheet satisfies the above relational expression, and thus, the mass percentage content of the lithium supplement additive in the positive electrode sheet can be controlled by adjusting Cmin, m and Q. By controlling the mass percentage content of the lithium supplement additive, it is helpful for the lithium supplement additive to slowly de-lithiate during the cycle process, so that its capacity can be slowly and continuously released, thereby continuously improving the charging capacity of the battery core and the secondary battery.

In addition, in the positive electrode sheet, the mass percentage content of the lithium supplement additive is limited within the range satisfied by the above relational expression, which facilitates the cycle of the lithium supplement additive at a high rate. Specifically, when the mass percentage content of the lithium supplement additive is controlled within the range satisfied by the above relational expression, during the actual cycling process, the charge-discharge rate suitable for the positive electrode active material will be a high rate for the lithium supplement additive within the above content range. That is, under the charge-discharge rate of the normal cycle applicable to the positive electrode active material, the lithium supplement additive can cycle at a high rate. Such high-rate cycling easily destroys the crystal structure of the lithium supplement additive, causing the deintercalated lithium ions to remain on the negative electrode side because they cannot reinsert back into the positive electrode body, thereby achieving the effect of supplementing lithium to the negative electrode, thereby improving the cycle life of the battery cell and the secondary battery. Meanwhile, by limiting the mass percentage content of the lithium supplement additive within the range satisfied by the above relational expression, the cycle stability of the positive electrode active material is not affected while the gram capacity is improved.

In the above relational expression, the phase of the lithium supplement additive added to the electrode sheet can be determined by the X-ray diffraction spectrum (XRD) of the positive electrode sheet before the test cycle to determine the chemical structural formula, then the metal elements other than iron in the electrode sheet are measured by the inductively coupled plasma mass spectrometry (ICP) of the positive electrode sheet, and the mass percentage content of the lithium supplement additive in the positive electrode sheet, i.e., R, is determined by the test results of XRD and ICP.

In the above relational expression, it can be determined through two tests of XRD and ICP that the addition amounts of the positive electrode active material and the lithium supplement additive in the positive electrode sheet before the cycle are m1 and m2, respectively, and thus the total mass of the positive electrode active material layer loaded on the positive electrode sheet per unit area, i.e., $m = m1 + m2$, can be obtained. Then, the positive electrode sheet is used to prepare a button cell battery, and the capacity value of the button cell battery is tested. For example, the button cell battery may be charged at a constant current of 0.5C rate at room temperature until the voltage is higher than 4.35 V, and further charged at a constant voltage of 4.35 V until the current is lower than 0.05C, so that the button cell battery is in a 4.35 V fully charged state, and then the button cell battery is discharged at a constant current of 1C rate until the voltage is 3 V (cut-off voltage), and the released capacity value is recorded as q, i.e., the capacity value of the button cell battery. Accordingly, according to the capacity value q, the addition amount m1 and the theoretical gram capacity (denoted as q1) of the positive electrode active material, and the addition amount m2 of the lithium supplement additive, the theoretical gram capacity Q of the added lithium supplement additive can be obtained by the formula $q = (m1/m) * q1 + (m2/m) * Q$.

In some implementations, $0.01C \leq Cmin \leq 1C$. For example, Cmin may be 0.01C, 0.05C, 0.08C, 0.1C, 0.3C, 0.5C, 0.8C, 1C, or within a range composed of any of the above values. Optionally, $0.05C \leq Cmin \leq 0.95C$.

The minimum rate value Cmin applied to the positive electrode sheet in the actual application process is within the above range, which is beneficial to the utilization of the capacity of the positive electrode active material, and the regulation of the mass percentage content of the lithium supplement additive, and meanwhile, the lithium supplement additive can be circulated at a high rate, thereby realizing the lithium supplement to the negative electrode side, thereby comprehensively improving the capacity and cycle performance of the battery cell and the secondary battery.

In some implementations, $0.1\,g/mm^2 \leq m \leq 0.5\,g/mm^2$. For example, m may be $0.1\,g/mm^2$, $0.2\,g/mm^2$, $0.3\,g/mm^2$, $0.4\,g/mm^2$, $0.5\,g/mm^2$, or within a range composed of any of the above values. Optionally, $0.2\,g/mm^2 \leq m \leq 0.4\,g/mm^2$.

The loading capacity m per unit area of the positive electrode sheet, i.e., the total mass of the positive electrode active material and the lithium supplement additive loaded on the positive electrode sheet per unit area is within the above range, which is beneficial for the lithium supplement additive to fully exert the lithium-supplementing effect on the positive electrode, and helps the lithium supplement additive to slowly and continuously release the capacity, thereby continuously improving the charging capacity of the battery cell and the secondary battery.

In some implementations, 150 milliampere-hours/gram (mAh/g) $\leq Q \leq 300$ mAh/g. For example, Q may be 150 mAh/g, 170 mAh/g, 190 mAh/g, 210 mAh/g, 230 mAh/g, 250 mAh/g, 270 mAh/g, 290 mAh/g, 300 mAh/g, or within a range composed of any of the above values. Optionally, 190 mAh/g $\leq Q \leq 280$ mAh/g.

The theoretical gram capacity Q of the lithium supplement additive is within the above ranges, which is beneficial to achieve the lithium-supplementing effect on the positive electrode and sufficiently improve the gram capacity of the positive electrode active material, and is also beneficial to regulate the mass percentage content of the lithium supplement additive and control the addition amount within an appropriate range, thereby facilitating the realization of a slow and continuous lithium-supplementing effect and realizing the continuous improvement of the charging capacity of the battery cell and the secondary battery.

In some implementations, $0.01\% \leq R \leq 20\%$. For example, R may be 0.01%, 0.05%, 0.08%, 0.1%, 0.5%, 0.8%, 1%, 3%, 5%, 8%, 10%, 13%, 15%, 18%, 20%, or within a range composed of any of the above values. Optionally, $1\% \leq R \leq 10\%$.

In the above relational expression, by controlling the value range of each parameter, it is helpful to regulate and control the mass percentage content of the lithium supplement additive, and control it within the above range. By controlling the mass percentage content of the lithium supplement additive within this range and in cooperation with the specific voltage range during the actual cycle process, it is beneficial for the lithium supplement additive to slowly de-lithiate, so that its capacity can be slowly released, and continuous lithium supplement is realized during the cycle process, thereby realizing continuous improvement of the charging capacity. At the same time, it is also helpful for the lithium supplement additive to be cycled at a high rate to achieve the effect of supplementing lithium to the negative electrode, thereby improving the cycle life of the battery cell and the secondary battery.

As a non-limiting example, the positive electrode sheet contains 1 gram (g) of lithium iron phosphate with a capacity of 160 milliampere-hours (mAh), and if 0.1g of the lithium supplement additive with a theoretical gram capacity of 180mAh/g is added, during the actual cycle process, the lithium supplement additive can realize slow delithiation by cooperating with the specific cycle voltage range of the battery cell, thereby slowly and continuously increasing the capacity of the battery cell, and the capacity can be increased to 160 * (1/1.1) + 180 * (0.1/1.1) = 162 mAh.

In some implementations, the lithium supplement additive includes, but is not limited to, one or more of lithium manganate, a nickel-cobalt-manganese ternary material, a nickel-cobalt-aluminum ternary material and lithium nickelate, and optionally a nickel-cobalt-manganese ternary material.

In some implementations, the positive electrode active material includes, but is not limited to, one or more of lithium iron phosphate, lithium manganese phosphate, lithium cobaltate and lithium manganese iron phosphate, and optionally lithium iron phosphate.

The above types of positive electrode active materials belong to lithium iron phosphate-based positive electrode materials, and generally have a relatively low theoretical gram capacity. However, by adding the above types of lithium supplement additives with relatively high gram capacity, it is beneficial to improve the gram capacity of the positive electrode active material, thereby improving the charging capacity of the battery cell and the secondary battery.

The positive electrode sheet includes a positive electrode active material layer and a positive electrode current collector, and the positive electrode active material layer is disposed on at least one surface of the positive electrode current collector.

It can be understood that the positive electrode active material layer includes the positive electrode active material and the lithium supplement additive described above in the present application, that is, the positive electrode active material and the lithium supplement additive included in the positive electrode sheet are disposed in the positive electrode sheet of the present application in the form of a positive electrode active material layer.

As an example, the positive current collector has two surfaces opposite to each other in its own thickness direction, and the positive electrode active material layer is disposed on either one or both of the two opposite surfaces of the positive current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode active material may also include other positive electrode active materials for a battery well-known in the art. As an example, the other positive pole active materials may include at least one of olivine-structured lithium-containing phosphate, lithium transition metal oxide, and respective modified compounds thereof. One or more of these positive electrode active materials may be used in combination with one or more of the positive electrode active materials described above in the present application. Among them, examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$ or $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also simply referred to as $NCM_{333}$), $LiNi_{0.5}Co_{0.2}Mn_{0.3}O_2$ (also simply referred to as $NCM_{523}$), $LiNi_{0.5}Co_{0.25}Mn_{0.25}O_2$ (also simply referred to as $NCM_{211}$), $LiNi_{0.6}Co_{0.2}Mn_{0.2}O_2$ (also simply referred to as $NCM_{622}$), $LiNi_{0.8}Co_{0.1}Mn_{0.1}O_2$ (also simply referred to as $NCM_{811}$)), lithium nickel cobalt aluminum oxide (e.g., $LiNi_{0.85}Co_{0.15}Al_{0.05}O_2$), modifying compounds thereof, and the like. Examples of the olivine-structured lithium-containing phosphate may include, but are not limited to, at least one of lithium iron phosphate (e.g., $LiFePO_4$ (which may also be simply referred to as LFP)), a composite of lithium iron phosphate and carbon, lithium manganese phosphate (e.g., $LiMnPO_4$), a composite material of lithium manganese phosphate and carbon, lithium ferro-manganese phosphate, and a composite material of lithium ferro-manganese phosphate and carbon.

It should be noted that deintercalation and consumption of Li occur during charging and discharging of the battery, and the molar content of Li varies when the battery is discharged to different states. In the enumeration of the positive electrode active material in the present application, the molar content of Li is an initial state of the material, i.e., a state before adding. The positive electrode active material is applied to a battery system, and the molar content of Li changes after charging and discharging cycles.

In the enumeration of the positive electrode active material in the present application, the molar content of O is only a theoretical state value, the molar content of O changes due to the release of oxygen from a lattice, and the actual molar content of O fluctuates.

In some implementations, the positive electrode active material may also include at least one of the following materials: a sodium transition metal oxide, a polyanion compound, and a Prussian blue compound. However, the present application is not limited to these materials, and other conventional materials that can be used as a positive pole active material of a battery may also be used. One or more of these positive electrode active materials may be used in combination with one or more of the positive electrode active materials described above in the present application.

As an optional technical solution of the present application, in the sodium transition metal oxide, a transition metal includes at least one of Mn, Fe, Ni, Co, Cr, Cu, Ti, Zn, V, Zr, and Ce. The sodium transition metal oxide is, for example, $Na_xMO_2$, where M includes one or more of Ti, V, Mn, Co, Ni, Fe, Cr, and Cu, and $0 < x \leq 1$.

As an optional technical solution of the present application, the polyanionic compound may be a compound having a sodium ion, a transition metal ion, and a tetrahedral $(YO_4)^{n-}$ anion unit. The transition metal includes at least one of Mn, Fe, Ni, Co, Cr, Cu, Ti, Zn, V, Zr, and Ce; Y includes at least one of P, S, and Si; and n represents the valence state of $(YO_4)^{n-}$.

The polyanionic compound may alternatively be a compound having a sodium ion, a transition metal ion, a tetrahedral $(YO_4)^{n-}$ anion unit, and a halogen anion. The transition metal includes at least one of Mn, Fe, Ni, Co, Cr, Cu, Ti, Zn, V, Zr, and Ce; Y includes at least one of P, S, and Si, and n represents the valence state of $(YO_4)^{n-}$; and the halogen includes at least one of F, Cl, and Br.

The polyanionic compound may alternatively be a compound having a sodium ion, a tetrahedral $(YO_4)^{n-}$ anion unit, a polyhedral unit $(ZO_y)^{m+}$, and an optional halogen anion. Y includes at least one of P, S, and Si, and n represents the valence state of $(YO_4)^{n-}$; Z represents a transition metal, including at least one of Mn, Fe, Ni, Co, Cr, Cu, Ti, Zn, V, Zr, and Ce, and m represents the valence state of $(ZO_y)^{m+}$; and the halogen includes at least one of F, Cl, and Br.

The polyanion compound is, for example, at least one of $NaFePO_4$, $Na_3V_2(PO4)_3$ (sodium vanadium phosphate, NVP for short), $Na_4Fe_3(PO_4)_2(P_2O_7)$, $NaM'PO_4F$ (M' includes one or more of V, Fe, Mn, and Ni), and $Na_3(VO_y)_2(PO_4)_2F_{3-2y}$ ($0 \leq y \leq 1$).

The Prussian blue compound may be a compound having a sodium ion, a transition metal ion, and a cyanide ion $(CN^-)$. The transition metal includes at least one of Mn, Fe, Ni, Co, Cr, Cu, Ti, Zn, V, Zr, and Ce. The Prussian blue compound is, for example, $Na_aMe_bMe'_c(CN)_6$, where Me and Me' each independently include at least one of Ni, Cu, Fe, Mn, Co, and Zn, $0 < a \leq 2$, $0 < b < 1$, and $0 < c < 1$.

In some implementations, the positive electrode active material layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode active material layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared by dispersing the above components for preparing a positive electrode sheet, for example, a positive electrode active material, a lithium supplement additive, a conductive agent, a binder, and any other components in a solvent (for example, N-methylpyrrolidone) to form a positive electrode slurry, and applying the positive electrode slurry to a positive electrode current collector, followed by drying, cold pressing, and the like.

In some implementations, the mass percentage of the lithium supplement additive in the positive electrode slurry is 0.1% to 20%. For example, the mass percentage of the lithium supplement additive in the positive electrode slurry may be 0.1%, 0.5%, 0.8%, 1%, 3%, 5%, 8%, 10%, 13%, 15%, 18%, 20% or within a range composed of any of the above values.

In some implementations, the mass percentage of the positive electrode active material in the positive electrode slurry is 90% to 99%. For example, the mass percentage of the positive electrode active material in the positive electrode slurry may be 90%, 91%, 92%, 93%, 94%, 95%, 96%, 97%, 98%, 99%, or within a range composed of any of the above values.

The positive electrode sheet of the present application does not exclude other additional functional layers in addition to the positive electrode active material layer. For example, in some implementations, the positive electrode sheet of the present application further includes a conductive undercoat layer (for example, composed of a conductive agent and a binder) sandwiched between the positive electrode current collector and the positive electrode active material layer and disposed on the surface of the positive electrode current collector. In some other implementations, the positive electrode sheet of the present application further includes a protective layer covering the surface of the positive electrode active material layer.

Negative electrode sheet

The negative electrode sheet includes a negative electrode current collector and a negative electrode active material layer disposed on at least one surface of the negative electrode current collector, and the negative electrode active material layer includes a negative electrode active material.

As an example, the negative electrode current collector has two surfaces opposite to each other in its own thickness direction, and the negative electrode active material layer is disposed on either one or both of the two opposite surfaces of the negative electrode current collector.

In some implementations, the negative electrode current collector may be made of a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may be a negative electrode active material for a battery well-known in the art. As an example, the negative pole active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative pole active material of a battery may also be used. These negative pole active materials may be used alone or in combination of two or more thereof.

In some implementations, the negative active material layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer further optionally includes another auxiliary agent, for example, a thickening agent (e.g., sodium carboxymethyl cellulose (CMC-Na)).

In some implementations, the negative electrode piece may be prepared in the following manner: dispersing the above-mentioned components for preparing the negative electrode piece, for example, the negative electrode active material, the conductive agent, the binder, and any other component in a solvent (e.g., deionized water) to form a negative electrode paste; and coating the negative electrode paste on the negative electrode current collector, and performing procedures such as drying and cold pressing, to obtain the negative electrode piece.

The negative electrode sheet of the present application does not exclude other additional functional layers in addition to the negative electrode active material layer. For example, in some implementations, the negative electrode sheet of the present application further includes a conductive undercoat layer (e.g., composed of a conductive agent and a binder) sandwiched between the negative electrode current collector and the negative electrode active material layer and disposed on the surface of the negative electrode current collector. In some other implementations, the negative electrode sheet of the present application further includes a protective layer covering the surface of the negative electrode active material layer.

Electrolyte

The electrolyte functions to conduct ions between the positive electrode sheet and the negative electrode sheet. The type of the electrolyte is not specifically limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, the electrolyte salt may be a lithium salt. As an example, the lithium salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the electrolyte salt may also be a sodium salt. As an example, the sodium salt includes, but is not limited to, at least one of $NaPF_6$, $NaClO_4$, $NaBCl_4$, $NaSO_3CF_3$ and $Na(CH_3)C_6H_4SO_3$. The above sodium salts may be used alone or in combination of two or more.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

Separator

In some implementations, the secondary battery further includes a separator. The type of the separator is not particularly limited in the present application, and any well-known porous separator with good chemical stability and mechanical stability may be used.

In some implementations, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

A second aspect of the present application provides a battery cell, including the positive electrode sheet according to the first aspect of the present application.

In some implementations, the positive pole piece, the negative electrode piece, and the separator may be manufactured into the pole assembly through a winding process or a lamination process.

In some implementations, the battery cell includes an electrode assembly and a casing, and the casing may be used to encapsulate the electrode assembly and the electrolyte.

In some implementations, the casing may be a hard casing, such as a hard plastic casing, an aluminum casing, a steel casing, etc.; it may also be a soft package, such as a pouch soft package. The material of the pouch may be plastic, and examples of the plastic include polypropylene, polybutylene terephthalate, and polybutylene succinate.

In some implementations, during the actual charge-discharge cycle process, the cycle voltage range of the battery cell is 2.5 V to 3.65 V. For example, the cycle voltage of the battery cell can be 2.5 V, 2.65 V, 2.8 V, 2.95 V, 3.1 V, 3.25 V, 3.4 V, 3.65 V, or within a range composed of any of the above values.

During the actual charge-discharge cycle process, within the above cycle voltage range, the capacity of the positive electrode active material can be sufficiently released. At the same time, since the voltage range of the lithium supplement additive itself is higher than this cycle voltage range, when cycling within this voltage range, in combination with the specific addition amount of the lithium supplement additive in the positive electrode sheet (that is, the mass percentage content of the lithium supplement additive in the positive electrode sheet needs to satisfy the above relational expression), during multiple cycles, the lithium supplement additive can achieve slow delithiation, thereby achieving a continuous and slow release of the capacity, which is beneficial to realize a continuous improvement of the charging capacity of the battery cell.

In some implementations, during the actual charge-discharge cycle process, the cycle rate range of the battery cell is 0.33C to 1C. For example, the cycle rate of the battery cell may be 0.33C, 0.5C, 1C, or within a range composed of any of the above values.

During the actual charge-discharge cycle process, the above cycle rate range is suitable for the normal cycle of the positive electrode active material. However, within this cycle rate range, in combination with the specific addition amount of the lithium supplement additive in the positive electrode sheet (that is, the mass percentage content of the lithium supplement additive in the positive electrode sheet needs to satisfy the above relationship), the lithium supplement additive can be cycled at a high rate. Such high-rate cycling easily destroys the crystal structure of the lithium supplement additive, causing the deintercalated lithium ions to be unable to reinsert back into the positive electrode body and remain on the negative electrode side, thereby achieving the effect of supplementing lithium to the negative electrode, which is beneficial to improve the cycle life of the battery cell.

As a non-limiting example, the positive electrode sheet contains 0.9 g of lithium iron phosphate and 0.1 g of the lithium supplement additive with a theoretical gram capacity of 180 mAh/g, and its capacity is 162 mAh. If the minimum rate of the battery cell during the actual charge-discharge process is 0.3C, then the rate actually applied to the particle level of the lithium supplement additive is: $0.3 * 162/(180 * 0.1) = 2.7C$. When the lithium supplement additive is cycled at this high rate, the material is extremely prone to damage, resulting in the destruction of the crystal structure. As a result, lithium ions cannot be intercalated back and remain on the negative electrode side, thus achieving lithium supplement to the negative electrode.

A third aspect of the present application provides a secondary battery, which may include the battery cell according to the second aspect of the present application, or the secondary battery may also be directly assembled from components such as an electrode assembly and an outer package.

In some implementations, the positive pole piece, the negative electrode piece, and the separator may be manufactured into the pole assembly through a winding process or a lamination process.

In some implementations, the outer package may be used to encapsulate the above electrode assembly and the electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

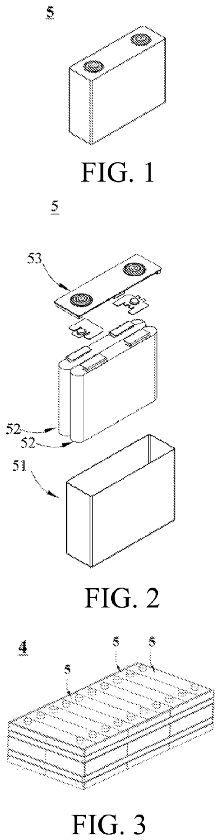

The shape of the secondary battery is not limited in this application, and may be a cylindrical shape, a square shape, or any other shape. For example, referring to FIG. 1, the secondary battery may be a battery cell 5 of a square structure.

In some implementations, referring to FIG. 2, the outer package of the secondary battery may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the battery cell 5, and those skilled in the art may perform selection according to specific actual requirements.

In some implementations, the secondary battery may also be a battery module assembled from a plurality of battery cells. The number of battery cells included in the battery module can be plural, and those skilled in the art may adjust the specific number according to the application and capacity of the battery module.

FIG. 3 shows a battery module 4 as an example. Referring to FIG. 3, in the battery module 4, a plurality of battery cells 5 may be arranged sequentially in the length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

In some implementations, the above battery cell may also be directly assembled into a battery pack, and the number of battery cells included in the battery pack may be adjusted according to the application and capacity of the battery pack.

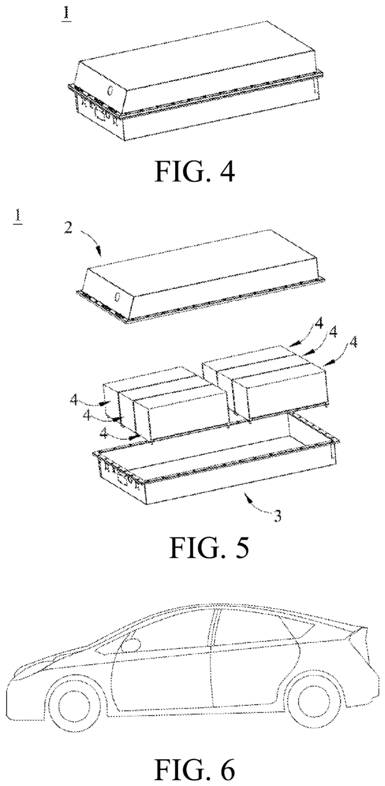

FIG. 4 and FIG. 5 show a battery pack 1 as an example. Referring to FIG. 4 and FIG. 5, the battery pack 1 may include a battery case and a plurality of battery modules 4 disposed in the battery case. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electric device, including the secondary battery provided in the present application. The secondary battery may be used as a power supply for the electric device, or as an energy storage unit for the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery may be selected according to use requirements of the electric device.

FIG. 6 shows an electric device as an example. The electric apparatus is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

Examples

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

Example 1

Preparation of positive electrode sheet

A positive electrode active material lithium iron phosphate (LiFePO$_4$), an NCM (LiNi$_{0.7}$Co$_{0.15}$Mn$_{0.15}$O$_2$) material with a gram capacity of 190 mAh/g, a conductive agent conductive carbon black (Super-P), and a binder polyvinylidene fluoride (PVDF) were dissolved in a solvent N-methylpyrrolidone at a mass ratio of 94:2:2:2 and mixed uniformly to prepare a positive electrode slurry. Then, the positive electrode slurry was uniformly coated on both the front and back sides of a current collector aluminum foil, and then dried at 85°C. After cold pressing and slitting, the positive electrode sheet was obtained.

Preparation of negative electrode sheet

A negative electrode active material graphite, a conductive agent acetylene black, a thickener sodium carboxymethyl cellulose (CMC), and a binder (SBR) were dissolved in a solvent deionized water at a weight ratio of 95:1:2:1. After being uniformly mixed with deionized water, a negative electrode slurry was prepared. Then, the negative electrode slurry was coated on both the front and back sides of a current collector copper foil. After drying, cold pressing and slitting, the negative electrode sheet was obtained.

Preparation of electrolyte solution

In an argon-atmosphere glove box with a water content of < 10 ppm, ethylene carbonate (EC), polycarbonate (PC), and dimethyl carbonate (DMC) were mixed at a weight ratio of EC:PC:DMC = 3:3:3 to obtain a mixed organic solvent.

Then, the fully dried lithium salt $LiPF_6$ was dissolved in the above mixed organic solvent. After stirring uniformly, the electrolyte solution was obtained, in which the concentration of $LiPF_6$ was 1 mole/liter (mol/L).

Preparation of separator

A PE porous film was adopted as the separator.

Preparation of lithium-ion battery

The positive electrode sheet, the separator, and the negative electrode sheet were made into a pouch battery cell through a winding process. Then, the electrolyte solution was injected, followed by high-temperature standing and formation. After that, the capacity was tested, and the lithium-ion battery was obtained.

Examples 2 to 18

The preparation methods of the positive electrode sheet and the lithium-ion battery were similar to those in Example 1, except that the relevant parameters of the positive electrode sheet and the preparation process thereof were adjusted. The specific parameters are shown in Table 1 below. "/" indicates absence of a corresponding parameter.

Comparative Example 1

The preparation methods of the positive electrode sheet and the lithium-ion battery were similar to those in Example 1, except that no lithium supplement additive was added to the positive electrode sheet.

Comparative Example 2

The preparation methods of the positive electrode sheet and the lithium-ion battery were similar to those in Example 1, except that the positive electrode sheet did not satisfy the relational expression $R \leq C_{min}/(100*m*Q)$.

Table 1

| | Positive electrode sheet | | | | | | | Battery cell | |
|---|---|---|---|---|---|---|---|---|---|
| | Cmin (C) | m (g/mm²) | Q (mAh/g) | R (%) | Whether R ≤ Cmin/(100*m*Q) is satisfied | Lithium supplement additive type | Positive electrode active material type | Cycle voltage range (V) | Cycle rate range (C) |
| Example 1 | 0.152 | 0.4 | 190 | 2 | Yes | $LiNi_{0.7}Co_{0.15}Mn_{0.15}O_2$ | $LiFePO_4$ | 2.5-3.65 | 0.33-1 |
| Example 2 | 0.076 | 0.4 | 190 | 1 | Yes | $LiNi_{0.7}Co_{0.15}Mn_{0.15}O_2$ | $LiFePO_4$ | 2.5-3.65 | 0.3-2 |
| Example 3 | 0.00475 | 0.5 | 190 | 0.05 | Yes | $LiNi_{0.7}Co_{0.15}Mn_{0.15}O_2$ | $LiFePO_4$ | 2.5-3.65 | 0.33-2 |
| Example 4 | 0.0095 | 0.5 | 190 | 0.1 | Yes | $LiNi_{0.7}Co_{0.15}Mn_{0.15}O_2$ | $LiFePO_4$ | 2.5-3.65 | 0.33-2 |
| Example 5 | 0.76 | 0.4 | 190 | 10 | Yes | $LiNi_{0.7}Co_{0.15}Mn_{0.15}O_2$ | $LiFePO_4$ | 2.5-3.65 | 0.33-2 |
| Example 6 | 0.76 | 0.2 | 190 | 20 | Yes | $LiNi_{0.7}Co_{0.15}Mn_{0.15}O_2$ | $LiFePO_4$ | 2.5-3.65 | 0.33-2 |
| Example 7 | 0.95 | 0.2 | 190 | 25 | Yes | $LiNi_{0.7}Co_{0.15}Mn_{0.15}O_2$ | $LiFePO_4$ | 2.5-3.65 | 0.33-2 |
| Example 8 | 0.2368 | 0.4 | 148 | 4 | Yes | $LiMn_2O_4$ | $LiFePO_4$ | 2.5-3.65 | 0.33-2 |
| Example 9 | 0.216 | 0.4 | 270 | 2 | Yes | $LiCoO_2$ | $LiFePO_4$ | 2.5-3.65 | 0.33-1 |
| Example 10 | 0.01 | 0.285 | 190 | 15 | Yes | $LiNi_{0.7}Co_{0.15}Mn_{0.15}O_2$ | $LiFePO_4$ | 2.5-3.65 | 0.33-1 |
| Example 11 | 1 | 0.19 | 190 | 0.1 | Yes | $LiNi_{0.7}Co_{0.15}Mn_{0.15}O_2$ | $LiFePO_4$ | 2.5-3.65 | 0.33-1 |
| Example 12 | 0.05 | 0.19 | 190 | 2 | Yes | $LiNi_{0.7}Co_{0.15}Mn_{0.15}O_2$ | $LiFePO_4$ | 2.5-3.65 | 0.33-1 |
| Example 13 | 0.038 | 0.1 | 190 | 2 | Yes | $LiNi_{0.7}Co_{0.15}Mn_{0.15}O_2$ | $LiFePO_4$ | 2.5-3.65 | 0.33-1 |
| Example 14 | 0.19 | 0.5 | 190 | 2 | Yes | $LiNi_{0.7}Co_{0.15}Mn_{0.15}O_2$ | $LiFePO_4$ | 2.5-3.65 | 0.33-1 |
| Example 15 | 0.019 | 0.05 | 190 | 2 | Yes | $LiNi_{0.7}Co_{0.15}Mn_{0.15}O_2$ | $LiFePO_4$ | 2.5-3.65 | 0.33-1 |
| Example 16 | 0.152 | 0.4 | 190 | 2 | Yes | $LiNi_{0.7}Co_{0.15}Mn_{0.15}O_2$ | $LiFePO_4$ | 3.65-4.3 | 0.33-1 |
| Example 17 | 0.152 | 0.4 | 190 | 2 | Yes | $LiNi_{0.7}Co_{0.15}Mn_{0.15}O_2$ | $LiFePO_4$ | 2.5-3.65 | 1-2 |
| Example 18 | 0.152 | 0.4 | 190 | 2 | Yes | $LiNi_{0.7}Co_{0.15}Mn_{0.15}O_2$ | $LiFePO_4$ | 3.65-4.3 | 1-2 |
| Comparative Example 1 | 0.152 | 0.4 | 190 | 0 | / | / | $LiFePO_4$ | 2.5-3.65 | 0.33-1 |
| Comparative Example 2 | 0.005 | 0.05 | 190 | 1 | No | $LiNi_{0.7}Co_{0.15}Mn_{0.15}O_2$ | $LiFePO_4$ | 2.5-3.65 | 0.33-1 |

In addition, the positive electrode sheets and lithium-ion batteries obtained in Examples 1 to 18 and Comparative examples 1 to 2 above were subjected to relevant performance tests, and the test results are shown in Table 2 below.

Test Section

(1) Charging capacity test

Under the condition of an ambient temperature of 25 degrees Celsius (°C), ① the battery cell was charged to 3.65 V at a constant current with a rate of 0.33C, then the voltage was kept constant to 0.05C, the capacity measured in this step was the charging capacity value, ② the battery cell was allowed to stand for 30 minutes (min), and ③ the battery cell was discharged to 2.5 V at a constant current with a rate of 0.33C.
Charging capacity per unit area = charging capacity/area of the positive electrode sheet.

(2) Cycle life test

① When the ambient temperature reached the temperature required for cycling, the cycling test process was started, ② the battery cell was charged to 3.65 V at a constant current with a rate of 1C, then the voltage was kept constant to 0.05C, ③ the battery cell was allowed to stand for 5 min, ④ the battery cell was discharged to 2.5 V at a constant current with a rate of 1C, ⑤ the battery cell was allowed to stand for 5 min, and ⑥ steps ②-⑤ were repeated to test the cycle performance of the battery cell.

Capacity retention rate = (charging capacity after 400/800 cycles)/charging capacity of the first cycle

Decrease of the capacity retention rate = (capacity retention rate after 400 cycles - capacity retention rate after 800 cycles)/capacity retention rate after 400 cycles

Table 2

| | Charging capacity per unit area of the first cycle (mAh) | Charging capacity per unit area after 400 cycles (mAh) | Capacity retention rate after 400 cycles (%) | Charging capacity per unit area after 800 cycles (mAh) | Capacity retention rate after 800 cycles (%) | Decrease of the capacity retention rate (%) |
|---|---|---|---|---|---|---|
| Example 1 | 63.55 | 58.15 | 91.5 | 55.93 | 88 | 3.8 |
| Example 2 | 62.82 | 57.16 | 91 | 54.02 | 86 | 5.5 |
| Example 3 | 77.65 | 69.88 | 90 | 67.16 | 86.50 | 3.9 |
| Example 4 | 77.69 | 69.92 | 90 | 67.59 | 87 | 3.3 |
| Example 5 | 69.45 | 62.85 | 90.5 | 59.73 | 86 | 5 |
| Example 6 | 38.41 | 34.95 | 91 | 33.03 | 86 | 5.5 |
| Example 7 | 40.26 | 36.83 | 91.5 | 34.22 | 85 | 7.1 |
| Example 8 | 64.38 | 58.58 | 91 | 54.72 | 85 | 6.6 |
| Example 9 | 64.18 | 59.68 | 93 | 55.83 | 87 | 6.5 |
| Example 10 | 52.11 | 48.20 | 92.5 | 45.34 | 87 | 5.9 |
| Example 11 | 29.52 | 27.16 | 92 | 25.39 | 86 | 6.5 |
| Example 12 | 30.19 | 27.77 | 92 | 25.96 | 86 | 6.5 |
| Example 13 | 15.89 | 14.46 | 91 | 13.51 | 85 | 6.6 |
| Example 14 | 79.44 | 72.69 | 91.5 | 67.53 | 85 | 7.1 |
| Example 15 | 7.94 | 7.19 | 90.5 | 6.83 | 86 | 5 |
| Example 16 | 63.55 | 57.83 | 91 | 54.66 | 86 | 5.5 |
| Example 17 | 63.55 | 57.83 | 91 | 54.02 | 85 | 6.6 |

(continued)

|  | Charging capacity per unit area of the first cycle (mAh) | Charging capacity per unit area after 400 cycles (mAh) | Capacity retention rate after 400 cycles (%) | Charging capacity per unit area after 800 cycles (mAh) | Capacity retention rate after 800 cycles (%) | Decrease of the capacity retention rate (%) |
|---|---|---|---|---|---|---|
| Example 18 | 63.55 | 57.83 | 91 | 54.02 | 85 | 6.6 |
| Comparative Example 1 | 62.08 | 54.63 | 88 | 49.66 | 80 | 9.1 |
| Comparative Example 2 | 7.81 | 6.95 | 89 | 6.33 | 81 | 8.9 |

From Table 2 above, by comparing the examples with Comparative example 1, it can be seen that both the capacity retention rate after 400 cycles and the capacity retention rate after 800 cycles of the examples are higher than those of Comparative example 1. This indicates that compared with the case of not adding a lithium supplement additive, adding a lithium supplement additive to the positive electrode sheet in this application can increase the charging capacity of the battery.

By comparing the examples with Comparative example 2, it can be seen that both the capacity retention rate after 400 cycles and the capacity retention rate after 800 cycles of the examples are higher than those of Comparative example 2, and the decrease of the capacity retention rate is also higher than that of Comparative example 2. This indicates that when the positive electrode sheet does not satisfy the relationship $R \leq C_{min}/(10*m*Q)$, the effect of the lithium supplement additive on increasing the battery charging capacity is relatively small, and it is difficult to achieve a slow increase in capacity.

By comparing Example 1 with Examples 16 to 18, it can be seen that the decrease of the capacity retention rate of Examples 16 to 18 is significantly lower than that of Example 1. This indicates that when the cycle voltage range or the cycle rate range is not within the scope of this application, it will have a certain influence on the slow release of the capacity of the lithium supplement additive.

In addition, it should be noted that, in Examples 6 to 7, Examples 10 to 13 and Example 15, since the loading capacity m per unit area of the positive electrode sheet is lower than that in other examples, the charging capacity per unit area is also correspondingly lower than that in other examples.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. A positive electrode sheet, comprising a positive electrode active material and a lithium supplement additive, wherein the lithium supplement additive satisfies the following relational expression:

$$R \leq C_{min}/(100*m*Q),$$

   wherein in the expression, m represents a loading capacity on the positive electrode sheet per unit of area, and the loading capacity comprises a total mass of the positive electrode active material and the lithium supplement additive;
   $C_{min}$ represents a minimum rate value applied to the positive electrode sheet during an actual application process;
   Q represents a theoretical gram capacity of the lithium supplement additive; and
   R represents a mass percentage content of the lithium supplement additive in the loading capacity on the positive electrode sheet per unit of area.

2. The positive electrode sheet according to claim 1, wherein the following condition is satisfied: $0.1\% \leq R \leq 20\%$.

3. The positive electrode sheet according to claim 1 or 2, wherein the following condition is satisfied: $1\% \leq R \leq 10\%$.

4. The positive electrode sheet according to any one of claims 1 to 3, wherein one or more of the following conditions are satisfied:

$$(1)\ 0.01C \le C_{min} \le 1C;$$

$$(2)\ 0.1\ g/mm^2 \le m \le 0.5\ g/mm^2;$$

and

$$(3)\ 150\ mAh/g \le Q \le 300\ mAh/g.$$

5. The positive electrode sheet according to any one of claims 1 to 4, wherein the following condition is satisfied: $0.05C \le C_{min} \le 0.95C$.

6. The positive electrode sheet according to any one of claims 1 to 5, wherein the following condition is satisfied: $0.2\ g/mm^2 \le m \le 0.4\ g/mm^2$.

7. The positive electrode sheet according to any one of claims 1 to 6, wherein the following condition is satisfied: $190\ mAh/g \le Q \le 280\ mAh/g$.

8. The positive electrode sheet according to any one of claims 1 to 7, wherein the lithium supplement additive comprises one or more of lithium manganate, a nickel-cobalt-manganese ternary material, a nickel-cobalt-aluminum ternary material, lithium cobaltate and lithium nickelate.

9. The positive electrode sheet according to any one of claims 1 to 8, wherein the positive electrode active material comprises one or more of lithium iron phosphate, lithium manganese phosphate and lithium manganese iron phosphate.

10. A battery cell, comprising the positive electrode sheet according to any one of claims 1 to 9.

11. The battery cell according to claim 10, wherein the battery cell has a cycle voltage range of 2.5 V to 3.65 V.

12. The battery cell according to claim 10 or 11, wherein the battery cell has a cycle rate range of 0.33C to 2C.

13. A secondary battery, comprising the battery cell according to any one of claims 10 to 12.

14. An electric device, comprising the secondary battery according to claim 13.

FIG. 1

FIG. 2

FIG. 3

FIG. 4

FIG. 5

FIG. 6

## INTERNATIONAL SEARCH REPORT

| International application No. |
|---|
| **PCT/CN2024/076056** |

| | |
|---|---|
| **A.** | **CLASSIFICATION OF SUBJECT MATTER** |

H01M4/36(2006.01)i; H01M4/58(2010.01)i; H01M10/0525(2010.01)i; H01M10/058(2010.01)i; H01M4/131(2010.01)i

According to International Patent Classification (IPC) or to both national classification and IPC

| | |
|---|---|
| **B.** | **FIELDS SEARCHED** |

Minimum documentation searched (classification system followed by classification symbols)

IPC: H01M10, H01M4

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 正极, 极片, 正极?片, 比例, 含量, 补锂, 磷酸铁锂, 镍钴铝, 镍钴锰, 镍钴锰酸锂, 涂, 电池, 电压, 倍率, 克容量, LiFePO4, NCA, NCM, LiNi0.7Co0.15Mn0.15O2, positive electrode, piece, sheet, ratio, content, lithium iron phosphate, nickel cobalt aluminum, nickel cobalt manganese, nickel cobalt lithium manganate, battery, voltage, rate, capacity

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 106299502 A (TONGXIANG ZHONGSHENG ENERGY TECHNOLOGY CO., LTD.) 04 January 2017 (2017-01-04) <br> description, paragraphs 6-51 and 65-69 | 1-14 |
| X | CN 101038960 A (SANYO ELECTRIC CO., LTD.) 19 September 2007 (2007-09-19) <br> description, page 13 lines 10-14, and page 14 line 14-page 18 line 9 | 1-14 |
| X | CN 102956874 A (ZHUHAI YINTONG ENERGY CO., LTD.) 06 March 2013 (2013-03-06) <br> description, paragraphs 5-24, 31-54, and 77-88 | 1-14 |
| X | CN 112993412 A (WUHU ETC BATTERY LTD.) 18 June 2021 (2021-06-18) <br> description, paragraphs 55-73 | 1-14 |
| X | CN 115207359 A (GUANGZHOU YUNTONG LITHIUM BATTERY CO., LTD.) 18 October 2022 (2022-10-18) <br> description, paragraphs 20-43 | 1-14 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2024** | **11 May 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/076056** |

### C.    DOCUMENTS CONSIDERED TO BE RELEVANT

| Category* | Citation of document, with indication, where appropriate, of the relevant passages | Relevant to claim No. |
|---|---|---|
| A | CN 109411751 A (ZHUHAI COSLIGHT BATTERY CO., LTD.) 01 March 2019 (2019-03-01)<br>  entire document | 1-14 |
| A | CN 114245947 A (NINGDE AMPEREX TECHNOLOGY LTD.) 25 March 2022 (2022-03-25)<br>  entire document | 1-14 |

Form PCT/ISA/210 (second sheet) (July 2022)

**INTERNATIONAL SEARCH REPORT**
**Information on patent family members**

International application No.

**PCT/CN2024/076056**

| Patent document cited in search report | | | Publication date (day/month/year) | Patent family member(s) | | | Publication date (day/month/year) |
|---|---|---|---|---|---|---|---|
| CN | 106299502 | A | 04 January 2017 | CN | 106299502 | B | 09 July 2019 |
| CN | 101038960 | A | 19 September 2007 | KR | 20070094474 | A | 20 September 2007 |
| | | | | US | 2007254209 | A1 | 01 November 2007 |
| | | | | JP | 2007250433 | A | 27 September 2007 |
| | | | | JP | 5137312 | B2 | 06 February 2013 |
| | | | | CN | 101038960 | B | 28 December 2011 |
| CN | 102956874 | A | 06 March 2013 | CN | 102956874 | B | 31 December 2014 |
| CN | 112993412 | A | 18 June 2021 | | None | | |
| CN | 115207359 | A | 18 October 2022 | CN | 115207359 | B | 20 December 2022 |
| CN | 109411751 | A | 01 March 2019 | | None | | |
| CN | 114245947 | A | 25 March 2022 | US | 2022302501 | A1 | 22 September 2022 |
| | | | | WO | 2022193179 | A1 | 22 September 2022 |
| | | | | EP | 4087007 | A1 | 09 November 2022 |
| | | | | EP | 4087007 | A4 | 28 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310759849